(19) **Europäisches Patentamt / European Patent Office / Office européen des brevets**

(11) **EP 1 953 545 A1**

(12) **DEMANDE DE BREVET EUROPEEN**

(43) Date de publication:
**06.08.2008 Bulletin 2008/32**

(51) Int Cl.:
*G01N 30/86* (2006.01)   *G06T 3/00* (2006.01)
*G06T 5/00* (2006.01)   *G01N 30/02* (2006.01)
*G01N 30/46* (2006.01)

(21) Numéro de dépôt: **08290061.4**

(22) Date de dépôt: **21.01.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **30.01.2007 FR 0700699**

(71) Demandeur: **IFP**
**92852 Rueil-Malmaison Cédex (FR)**

(72) Inventeurs:
• **Bertoncini, Fabrice**
  **69007 Lyon (FR)**
• **Celse, Benoît**
  **69740 Genas (FR)**
• **Duval, Laurent**
  **92000 Nanterre (FR)**

(54) **Méthode pour réaliser une analyse quantitative d'un mélange de composés moléculaires par chromatographie en phase gazeuse bidimensionnelle**

(57)   Méthode d'analyse quantitative d'un mélange de composés moléculaires par chromatographie en phase gazeuse bidimensionnelle.

On réalise une chromatographie en phase gazeuse bidimensionnelle au cours de laquelle on enregistre un signal chromatographique. De ce signal, on génère un chromatogramme en deux dimensions sur lequel des pics chromatographiques forment des taches. On délimite ces taches à l'aide de polygones. Puis, pour chaque polygone, on extrait des portions du signal chromatographique comprises entre deux intersections de ce polygone avec des colonnes du chromatogramme. On détermine des temps de début et de fin de pics chromatographiques présents sur ces portions, et l'on ajuste le polygone en déplaçant ses points d'intersection en fonction des temps de début et de fin de pics chromatographiques. Enfin, on détermine des quantités de composés moléculaires en calculant l'aire des polygones ainsi ajustés.

Application notamment à l'analyse quantitative de produits issus de l'industrie chimique ou pétrolière.

**Figure 4B**

**Description**

La présente invention concerne le domaine de l'analyse par chromatographie en phase gazeuse bidimensionnelle.

En particulier, l'invention propose une méthode d'analyse quantitative d'échantillons pétroliers par chromatographie en phase gazeuse bidimensionnelle.

La chromatographie en phase gazeuse bidimensionnelle (GC 2D) est une technique séparative particulièrement efficace pour effectuer des analyses moléculaires détaillées. Cette technique bien connue des spécialistes est décrite par exemple dans les brevets suivants : US 5,135,549 et US 5,196,039. Ces documents décrivent le principe du couplage en continu de deux colonnes de séparation différentes afin d'obtenir des chromatogrammes bidimensionnels.

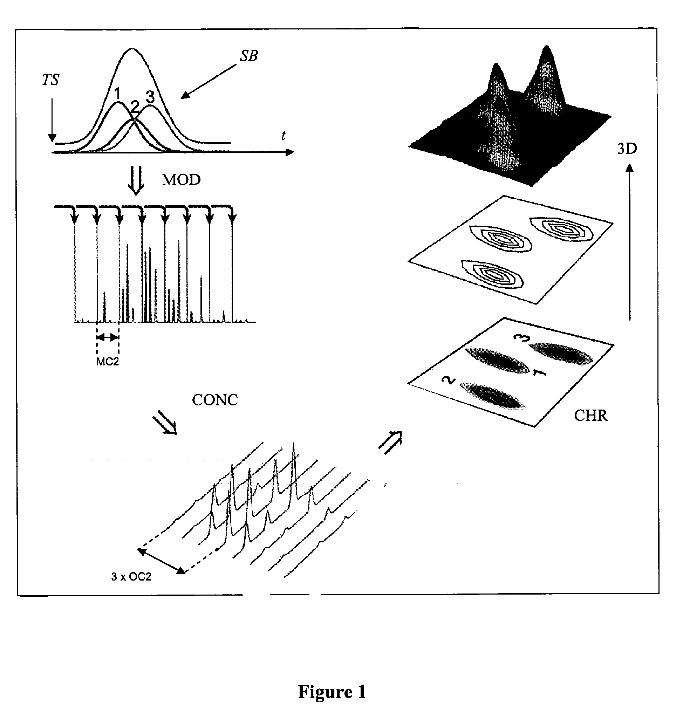

La chromatographie en phase gazeuse bidimensionnelle est une technique séparative dans laquelle tous les composés élués d'une première colonne sont successivement soumis à une séparation dans une deuxième colonne de sélectivité différente. Les deux colonnes sont connectées en série au moyen d'un modulateur qui est l'élément clé du dispositif. Cette interface échantillonne l'effluent de la première colonne sous forme d'impulsions chimiques et les transfère vers la deuxième colonne. La durée requise pour effectuer cette opération, appelée période de modulation, impose en général une deuxième séparation très rapide (quelques secondes) : les caractéristiques de la deuxième colonne sont choisies de telle sorte que chaque impulsion soit séparée durant la période de modulation. La figure 1 schématise le principe de la GC-2D.

Plus le composé a d'affinité avec la phase stationnaire, plus il mettra de temps à sortir de chacune des deux colonnes. A la sortie de la seconde colonne, les composés rencontrent un détecteur. Cet appareil mesure différentes propriétés physique du mélange gazeux sous forme d'une intensité en fonction du temps. Ce signal, nommé signal chromatographique ou « 1D brut », comporte un ensemble de pics, caractéristique de chaque constituant, dont la forme est fonction de l'intensité de la propriété mesurée. Chaque pic est nommé « pic d'élution » ou encore « pic chromatographique ». Le maximum de l'intensité correspondant à un pic est appelé temps de rétention Le signal ainsi enregistré peut être de différente nature en fonction du détecteur utilisé. Les détecteurs (TCD, FID, SCD, NCD...) sont choisis en fonction du type d'application par l'homme de l'art :

Certains détecteurs permettent de détecter quelques ppm (parties par million) d'un composant.

Le pic d'élution issu de la première colonne est échantillonné périodiquement par le modulateur. Chaque fraction est focalisée puis injectée en continu dans la deuxième colonne. Le signal chromatographique détecté, le signal 1D brut, correspond donc à une succession de séparations (matérialisées par des pics sur le signal) réalisées dans la deuxième dimension. En accolant ces chromatogrammes avec un offset, il est possible de reconstruire un signal dans les deux dimensions : le début de chaque cycle de modulation marque le temps de rétention d'un composé dans la première dimension, tandis que le maximum de chaque pic marque le temps de rétention dans la deuxième dimension. Pour que l'ordre de rétention dans la seconde dimension soit correct, il faut introduire un offset. Il permet de décaler tous les temps de rétention sur l'axe des ordonnées d'une valeur constante. Cette opération est utile pour représenter correctement la structure d'un chromatogramme dans lequel le temps de rétention secondaire (i.e. sur l'axe y) absolu d'un composé est supérieur à la période de modulation, à condition que la différence de temps de rétention entre le composé le moins retenu et le composé le plus retenu soit inférieure à la période de modulation (i.e. absence de chevauchement des séparations, ou « wrapping around »).

Le résultat peut se présenter soit sous la forme d'un chromatogramme à trois dimensions, deux des axes représentant les temps de rétention sur chacune des dimensions de séparation, et le troisième axe indiquant l'intensité du signal (3D sur la figure 1). La représentation la plus courante est bidimensionnelle (chromatogramme 2D), les deux axes du plan de séparation indiquant les coordonnées temporelles. Les pics chromatographiques (pics d'élution) forment alors des taches dont l'intensité est traduite par un dégradé de couleur. Cette représentation s'apparente à une image moléculaire de l'échantillon. Dans l'exemple présenté en figure 1, deux solutés coélués après la première séparation sont séparés lors de la deuxième séparation, pourvue que la nature des phases stationnaires revêtant chaque colonne soit adaptée.

Cependant, les résultats issus d'une chromatographie en phase gazeuse bidimensionnelle (GC 2D) doivent être couplés à des méthodes d'analyses de données complexes.

**État de la technique**

Comme en CPG (chromatographie en phase gazeuse) conventionnelle, la quantification d'un soluté en GC-2D s'effectue en étalonnant la réponse du détecteur par la mesure de l'aire du pic d'élution. Dans le cas spécifique de la GC-2D, le chromatogramme est généralement représenté sous la forme d'une surface iso-réponse qu'il convient d'intégrer pour obtenir le volume d'un pic d'élution proportionnel à la quantité de soluté introduite. Comme indiqué par la publication ci-dessous, on connaît trois types d'analyses quantitatives en chromatographie en phase gazeuse bidimensionnelle (GC 2D). Toutes ces méthodes reposent sur la définition de zones délimitant les taches représentatives des pics d'élution. Ces zones sont appelées « blobs » par les spécialistes.

Van Mispelaar V.G. et al., 2005, "Novel system for classifying chromatographic applications, exemplified by comprehensive two dimensional gas chromatography and multivariate analysis", Journal of Chromatography A., 1071 (2005) pp. 229-237.

1- Détermination des concentrations d'un certain nombre de composés prédéfinis.

Les composés sont identifiés par leurs temps de rétention selon les deux axes (i.e. les temps du maximum d'une zone). L'aire de la zone est convertie en concentration par le biais d'un étalon. On suppose dans cette analyse un retour net à la ligne de base entre deux zones. La ligne de base correspond au signal enregistré en l'absence de composés (i.e. en présence de la phase mobile seule).

2- Détermination des concentrations de groupes de pics.

Pour certaines applications, le nombre de pics est de plusieurs dizaines de milliers avec de fortes co-élutions. Il est alors pratiquement impossible d'identifier chaque pic individuellement. L'objectif est de les regrouper selon des pseudo-composants ayant des propriétés chimiques ou structurales communes (même type chimique (homologues structuraux, même nombre d'atomes de carbones, même nombre de double liaison, même nombre de cycles aromatiques, etc.).

3- Détermination des points communs et des différences entre plusieurs analyses.

L'objectif est de déterminer automatiquement les différences en termes de présence et de concentration des composés. Des techniques de traitement d'image et de classification sont utilisées. Ces techniques sont utilisées en particulier pour les analyses de suivi ou pour faire du « screening » d'échantillon, sans s'intéresser au détail analytique.

Pour mettre en oeuvre ce type d'analyse, on connaît trois types de modes opératoires.

*Mode 1*. Le principe est le suivant :

- Définition d'un masque générique de zones de contour de chaque constituant (ou blob) pour un type d'image. Des méta-données (nom du composant, propriétés du composant) peuvent éventuellement être ajoutées.

- Application du masque sur une nouvelle image

- Modification manuelle des blobs pour déterminer la position exacte sur la nouvelle image de chaque contour afin de tenir compte (i) des incertitudes expérimentales et (ii) des variations liées à la concentration des constituants

Ce mode de fonctionnement est proposé dans le logiciel GC Image® (Zoex, États-unis). Ce mode de fonctionnement est difficilement applicable : la définition des zones de contour de chaque blob est en effet très dépendante de l'utilisateur et de la manière de définir les pics individuels à partir de l'image complète. La méthode n'est donc ni très juste ni très répétable.

*Mode 2*. Le principe est le suivant :

- Détermination automatique de tous les pics de l'image par analyse d'image

- Association bi-univoque d'un pic à un blob

- Attribution manuelle d'un composant chimique pour chaque blob

Ce mode de fonctionnement est proposé dans la publication ci-dessous. Les pics sont déterminés directement sur l'image par un algorithme de type ligne de partage des eaux (« watershed »).

S.E. Reichenbach, V. Kottapalli, M. Ni, A. Visvanathan, 2005, Computer language for identifying chemicals with compehensive two-dimensional gas chomatography and mass spectrometry, Journal of Chromatography, Vol. 1071, pp. 263-269.

Ce mode n'est pas adapté au type d'analyse 2 car le nombre de pics est beaucoup trop élevé (plusieurs milliers). Il est alors impossible d'attribuer un composant à chaque pic. De plus, l'hypothèse implicite de relation bi-univoque entre un blob et un pic est fausse : un blob est souvent composé de plusieurs pics.

*Mode 3*. Le principe est le suivant :

- Détermination automatique de tous les pics de l'image

- Identification de pics par des règles.

Ce mode de fonctionnement est proposé dans la publication suivante :

M. Ni, S.E. Reichenbach, A. Visvanathan, J. TerMaat, E.B. Ledford, 2005, Peak pattern variations related to comprehensive two-dimensional gas chromatography, Journal of Chromatography, Vol. 1086, pp. 165-170.

La mise en place des règles est cependant délicate.

*Mode 4*. Le principe est le suivant :

- Détermination automatique de tous les pics du signal 1D brut (SB) correspondant à l'image par intégration conventionnelle (techniques de GC 1D).

- Définition de zones (blobs) dans l'image par l'utilisateur.

- L'aire finale du blob correspond à la somme des aires des pics du signal 1D brut (SB) appartenant au blob.

Ce mode de fonctionnement est proposé le logiciel HyperChrom® (Thermo, États-unis).

Daniela Cavagnino, Paolo Magni, Giacinto Zilioli, Sorin Trestianu, 2003, Comprehensive two-dimensional gas chromatography using large sample volume injection for the determination of polynuclear aromatic hydrocarbons in complex matrices, Journal of Chromatography A, 1019 (2003) 211-220

Cette méthode a cependant les inconvénients suivants :

- Il n'est pas possible de définir un masque prédéfinissant plusieurs blobs à appliquer pour chaque nouvelle analyse (pattern). Pour chaque nouvelle analyse, l'utilisateur doit définir un nouveau masque, ce qui est coûteux en temps d'analyse et opérateur -dépendant.

- Un blob est forcément un quadrilatère prédéfini, qui peut être ensuite déformé. Certains blobs ne peuvent donc être correctement placés pour détourer correctement chaque pic d'élution. Hors le type 2 impose de pouvoir délimiter des zones correspondant à plusieurs centaines de pics dont le contour peut être très tortueux.

- En cas de fortes co-élutions, il peut être très difficile de définir précisément les pics d'élution sur le chromatogramme secondaire correspondant à la seconde séparation. Dans ce cas, l'intégration proposée est généralement erronée car la zone à intégrer à partir du blob est mal définie. Il n'y a pas de contrôle a posteriori lors de l'absence de détection d'un pic.

- L'utilisateur ne peut visualiser réellement les limites de chaque blob.

*Mode 5*. Le principe est le suivant :

- Définition d'un masque de zones (blob) dans l'image

- Détermination automatique de tous les pics de l'image

- Attribution des pics définis précédemment aux blobs via des analyses statistiques.

Ce mode de fonctionnement est proposé dans la publication suivante :

M. Ni, S.E. Reichenbach2005, Using Edge pattern Matching for Automatic Chemical Identification in GC 2D, Automatic Target Recognition XIV. Edited by Sadjadi, Firooz A. Proceedings of the SPIE, Volume 5426, pp. 155-163 (2004).

L'ajustement entre les images est effectué pic par pic. Les auteurs réduisent les données en ne travaillant que sur le maximum du pic. Cependant, ils supposent implicitement une relation bi-univoque entre un pic et un blob (et donc un composant chimique). Ceci n'est pas le cas en pratique. De plus, la méthode proposée est très dépendante de la composition chimique du produit. Un blob pouvant contenir plusieurs pics dont le ratio de concentration peut varier, le maximum d'un blob peut être très variable.

En somme, la chromatographie en phase gazeuse bidimensionnelle est une technique particulièrement efficace et utilisée dans l'industrie pour réaliser des analyses quantitatives d'échantillons, pétroliers par exemple. Cette technique implique cependant des méthodes d'analyses complexes. Les méthodes actuelles d'analyse ne sont pas entièrement satisfaisantes :

- la définition de polygones délimitant les taches dans l'image est parfois difficile car le nombre de pics est très élevé. Ces zones peuvent également regrouper plusieurs pics.

- l'identification de zones (blobs) : l'association d'un composé chimique à une zone est délicate. Plus le nombre d'atomes de carbone est élevé, plus le nombre d'isomères est élevé. Il est alors délicat d'associer un composant à un pic.

De plus, ces méthodes d'analyses des résultats issus d'une chromatographie en phase gazeuse bidimensionnelle (GC 2D) sont manuelles et présentent donc deux inconvénients majeurs : elles nécessitent beaucoup de temps et leur résultats sont dépendants de la personne qui interprète. De ce fait, de telles analyses sont difficilement utilisables dans la pratique du fait de leur imprécision. Le nombre de polygones étant généralement supérieur à 150, des méthodes automatisées doivent donc être mises en place.

L'objet de la présente invention est de proposer une nouvelle méthodologie pour analyser des résultats de chromatographie en phase gazeuse bidimensionnelle, permettant de s'affranchir des problèmes ci-dessus mentionnés, et notamment de fournir une méthode d'analyse permettant d'une part d'ajuster automatiquement la forme des polygones entourant les zones (blobs), et d'autre part, de permettre l'utilisation de masque de polygones pour d'autres analyses en recalant automatiquement les polygones sur la nouvelle image (chromatogramme 2D).

**La méthode selon l'invention**

L'invention concerne une méthode d'analyse quantitative d'un mélange de composés moléculaires par chromatographie en phase gazeuse bidimensionnelle, dans laquelle :

- on enregistre un signal chromatographique (*SB*) comportant des pics chromatographiques ;

- on génère un chromatogramme (*CHR*) en deux dimensions dont chaque colonne correspond à une portion dudit signal chromatographique, lesdits pics chromatographiques formant des taches sur ledit chromatogramme ;

- on délimite lesdites taches à l'aide de polygones.

La méthode comporte les étapes suivantes pour au moins un polygone :

- on identifie des portions dudit signal chromatographique comprises entre deux intersections dudit polygone avec des colonnes dudit chromatogramme ;

- on détermine des temps de début, des temps de fin et des maximums de pics chromatographiques présents sur lesdites portions ;

- on ajuste ledit polygone en déplaçant lesdits points d'intersection en fonction desdits temps de début, desdits temps de fin et desdits maximums de pics chromatographiques ;

- on détermine une quantité d'au moins un composé moléculaire en calculant l'aire dudit polygone ainsi ajusté.

Selon la méthode, on peut ajuster le polygone en réalisant les étapes suivantes pour chaque point d'intersection entre ledit polygone et une colonne dudit chromatogramme :

- si ledit point d'intersection est compris entre le début et le maximum d'un pic chromatographique, le point est déplacé vers le temps de début du pic,

- si ledit point d'intersection est compris entre le maximum et la fin d'un pic chromatographique, le point est déplacé vers le temps de fin du pic,

- si ledit point d'intersection ne se situe pas entre un temps de début et un temps de fin d'un pic chromatographique, le point est déplacé verticalement le long d'une colonne vers le pic le plus proche, tant que ledit point n'est pas confondu avec la limite dudit polygone, ou avec la limite dudit chromatogramme, ou avec un début ou une fin de pic chromatographique.

On peut également ajuster les polygones en partant d'un premier point du polygone et tant que le dernier point n'est pas traité, en retirant un point du milieu si un point courant est aligné avec les deux suivants, et l'on retourne deux points en arrière, sinon on passe au point suivant. On peut aussi calculer la position finale d'un sommet d'un polygone par une interpolation linéaire par rapport aux sommets voisins.

Selon l'invention les taches peuvent être délimitées en construisant des polygones manuellement, ou à l'aide d'un masque de polygones que l'on adapte à la chromatographie en phase gazeuse bidimensionnelle utilisée en replaçant chaque sommet formant ledit polygone sur la colonne dudit chromatogramme la plus proche.

On peut déterminer les temps de début, les temps de fin et les maximums de pics chromatographiques, à partir des dérivées première, seconde et troisième desdites portions dudit signal chromatographique. Les dérivées peuvent être calculées à l'aide de la méthode de filtrage de Savitzky-Golay.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 illustre le principe de construction d'un chromatogramme en GC-2D.

- La figure 2 illustre un signal 1D brut (SB) enregistré en fonction du temps ($t$) par le détecteur en sortie de la seconde colonne.

- La figure 3 représente un chromatogramme 2D obtenu pour la séparation de composés azotés contenus dans un échantillon de distillat moyen.

- Les figures 4A et 4B présentent trois polygones (*P1, P2* et *P3*) avant (figure 4A) et après (figure 4B) resserrement des polygones sur les pics chromatographiques.

- Les figures 5A et 5B présentent un polygones avant (figure 5A) et après (figure 5B) resserrement sur un pic chromatographique.

- La figure 6 illustre les étapes de la méthode selon l'invention.

**Description détaillée de la méthode**

La méthode selon l'invention permet de réaliser des analyses quantitatives de mélange de composés moléculaires, tels que des produits pétroliers, en analysant des chromatogrammes issus de chromatographie en phase gazeuse bidimensionnelle.

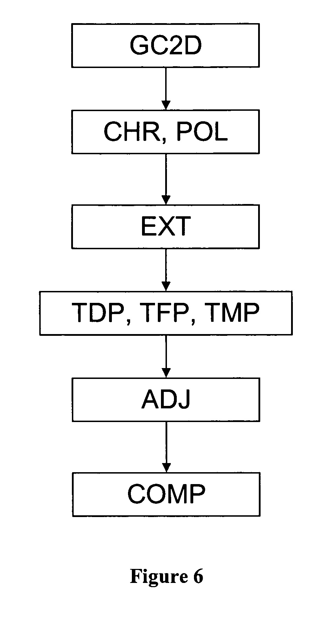

Après avoir réalisé une chromatographie en phase gazeuse bidimensionnelle (GC2D) sur un échantillon dont on souhaite déterminer la composition moléculaire, la méthode comporte principalement quatre étapes (figure 6) :

1- On construit un chromatogramme en deux dimensions(CHR) à partir de la chromatographie en phase gazeuse bidimensionnelle (GC2D) ;

2- On délimite les taches du chromatogramme par des polygones (POL) ;

3- On ajuste les polygones aux taches identifiées sur le chromatogramme (ADJ) ;

4- On détermine la composition moléculaire de l'échantillon en analysant les polygones (COMP).

1- Construction d'un chromatogramme en deux dimensions

L'image sur laquelle s'applique la méthode est un chromatogramme en deux dimensions. Un tel chromatogramme est caractérisé par les éléments suivants :

-   la période de modulation (*MC2*) : durée requise pour échantillonner l'effluent de la première colonne sous forme d'impulsions chimiques et les transférer vers la deuxième colonne.

-   la coordonnée temporelle du premier point pris en compte (*TS : Time Start*). Ce point est choisit par l'utilisateur car les débuts de signaux sont parfois inexploitables.

-   l'offset de deuxième colonne (*OC2*).

Ce chromatogramme est construit de la façon suivante (figure 1) :

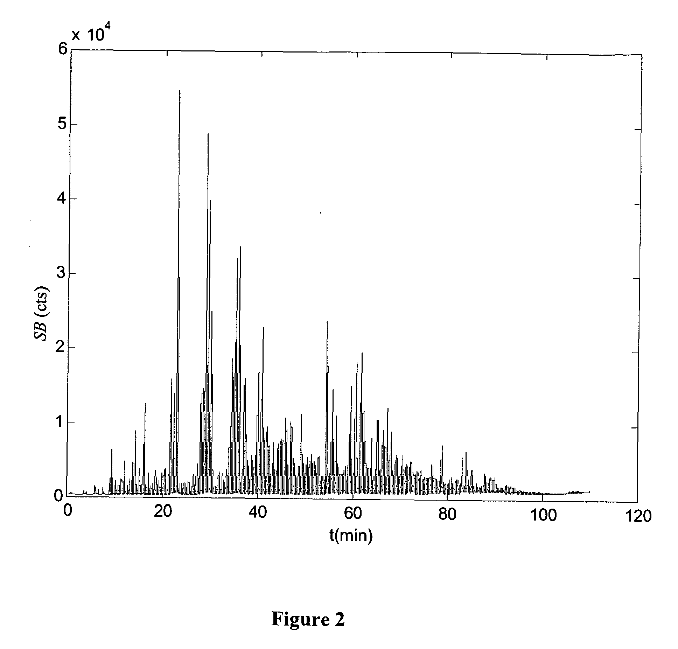

-   au cours de la chromatographie en phase gazeuse bidimensionnelle on enregistre un signal 1D brut (signal chromatographique), qui correspond au signal enregistré par le détecteur en sortie de la seconde colonne en fonction du temps (*t*). Un tel signal 1D brut (*SB*) est représenté en fonction du temps (*t*) sur la figure 2. Il est constitué d'un ensemble de points *P*(*t*) ;

-   les points de ce signal chromatographique (SB) ayant une coordonnée temporelle inférieure à *TS+OC2* sont retirés du signal ;

-   le signal est découpé en morceaux successifs de longueur *MC2,* c'est la modulation (*MOD*)

-   ces morceaux sont concaténés (*CONC*) verticalement côte à côte pour former une image 2D, appelée chromatogramme 2D (*CHR*). L'offset entre les colonnes est *OC2*.

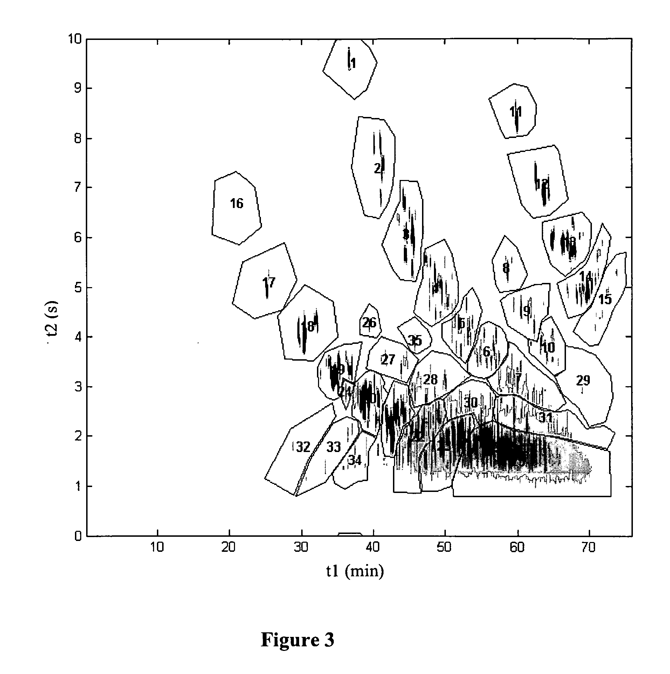

Ce chromatogramme 2D est la représentation la plus courante, il consiste donc en un ensemble de tranches (de largeur égale à la période de modulation *MC2*) de données brutes concaténées côte à côte. La figure 3 représente un chromatogramme 2D obtenu pour la séparation de composés azotés contenus dans un échantillon de distillat moyen. Les deux axes du plan de séparation indiquant les coordonnées temporelles de séparation pour la première colonne en abscisse et pour la seconde colonne en ordonnée. Des pics chromatographiques forment alors des taches dont l'intensité est traduite par un dégradé de couleur. Cette représentation s'apparente à une image moléculaire de l'échantillon.

Effectuer ces opérations revient à appliquer les formules suivantes à chaque point *P*(*t*) du signal 1D brut (SB) ayant une coordonnée temporelle supérieure à *TS+OC2* :

$$x = MC2 * floor\big((t - TS - OC2)/MC2\big) + TS + OC2 \qquad (1)$$

$$y = \mathrm{mod}\big((t - TS - OC2); MC2\big) \qquad (2)$$

Avec :

-   *t* : position temporelle du point *P*(*t*) sur le signal 1D brut ;

-   *x, y* les coordonnées spatiales sur le chromatogramme 2D du point *P*(*t*) ;

- *floor* : fonction qui retourne le plus grand entier qui n'est pas supérieur à l'argument ;

- *mod* : fonction qui renvoie le reste d'une division.

Notons que les relations exprimées ci-dessus ((1) et (2)), qui permettent de calculer les coordonnées spatiales $(x, y)$ d'un point $P(t)$ à partir de ses coordonnées temporelles sont réversibles : $t = x + y$. Cette relation liant le temps absolu ($t$) et les coordonnées $(x, y)$ d'un point sur l'image est respectée pour tout point apparaissant sur cette image (chromatogramme 2D), qu'il soit issu du signal 1D brut (SB) ou de la définition d'un polygone.

2- Délimitations des taches par des polygones sur ce chromatogramme

Le chromatogramme 2D ainsi construit présente des taches dont l'intensité est traduite par un dégradé de couleur et qui représentent les pics chromatographiques. L'aire de ces taches est proportionnelle à la quantité d'un composé moléculaire spécifique. Une tache est une zone du chromatogramme 2D comportant au moins un pic d'élution. Ces taches sont appelées « blobs » par les spécialistes. Ces taches sont de petits espaces de couleur différente (couleur des pics) tranchant sur un fond d'une autre couleur (couleur de la ligne de base). Il convient donc, dans un premier temps, de délimiter ces zones. Cette délimitation forme un polygone, c'est-à-dire une figure géométrique fermée et limitée par des segments de droite (côtés), dont chacun a une extrémité commune (sommet) avec le précédent et le suivant.

Deux solutions peuvent être envisagées. Soit les polygones sont créés manuellement par une personne qui interprète l'image 2D, soit on applique un masque de polygones, c'est-à-dire un ensemble de polygones préalablement déterminés. Il peut s'agir d'un masque issu d'une analyse antérieur d'un soluté similaire par exemple.

Dans ce second cas, le masque doit être adapté à l'étude en cours. Le paragraphe précédent a montré comment l'image 2D (le chromatogramme 2D) était constituée de juxtapositions de segments du signal 1D brut (SB) tracés verticalement. La relation $t = x + y$ qui lie les points de l'image avec ceux du signal 1D brut (SB) n'est valable que pour les points au centre des colonnes. Elle ne peut donc pas être appliquée directement. Un recalage horizontal doit être effectué. Il consiste à replacer chaque sommet de polygone saisi à la souris par l'utilisateur sur la colonne la plus proche :

$$x' = round\left(\left(x - OC2 - TS\right)/MC2\right) * MC2 + OC2 + TS$$

avec *round* : fonction retournant l'entier le plus proche du nombre passé en argument.

A offset de deuxième colonne (*OC2*), coordonnée temporelle du premier point pris en compte (*TS*) et période de modulation (*MC2*) fixes, une bijection $t = x + y$ peut être définie. Elle associe à chaque instant un jeu de coordonnées dans l'image. Les polygones sont donc stockés sous la forme suivante :

- $\{tk\}$ : coordonnées temporelles sur le signal 1D brut (SB) des $k$ sommets du polygone,

- *OC2* : offset de deuxième colonne à la création du polygone,

- *TS* : valeur de la coordonnée temporelle du premier point pris en compte à la création du polygone,

- *MC2* : période de modulation à la création du polygone.

Le stockage de la période de modulation permet de déterminer si un polygone est cohérent avec les paramètres d'acquisition d'une analyse (même période). Le stockage de l'offset de deuxième colonne et du *TS* permet de disposer d'au moins une configuration dans laquelle le polygone entier est visible sur l'image. Ce mode de stockage permet de ré-appliquer facilement un masque de polygone sur une nouvelle analyse même si l'offset utilisé est différent. Les fonctionnalités d'ajout, suppression, modification de sommets de polygone peuvent alors être facilement implémentées : les positions spatiales sont automatiquement converties en position temporelles. Cette structure de données permet alors :

- d'avoir une relation bijective entre l'image et le signal 1D brut (SB) ;

- d'être indépendant de l'offset choisi par l'utilisateur. Un masque de polygones défini avec un certain offset peut être appliqué sur une nouvelle analyse même si elle a un offset différent.

- de pouvoir utiliser les temps correspondants à l'intégration sur un signal 1D brut (SB) pour recaler les points sur l'image 2D.

<u>3- Ajustement des polygones à des taches identifiées sur le chromatogramme</u>

Grâce à la structure de données décrite précédemment, il est possible d'appliquer un masque de polygones sur une nouvelle analyse (ceci indépendamment de l'offset). L'objectif est ensuite de recaler les polygones sur une nouvelle analyse. C'est à dire de les caler sur des temps de début et de fin de pics d'élution sur les signaux 1D correspondant à l'intersection entre les colonnes de l'image et le polygone. L'ajustement des polygones est décomposé en trois étapes distinctes :

- détermination de signaux 1D (morceaux du signal 1D brut (SB)) correspondant à l'intersection entre un polygone et les colonnes de l'image ;

- détermination des pics d'élution sur ce signal 1D ;

- ajustement d'un polygone sur les temps de début et de fin des pics calculés précédemment.

*3.1- Détermination des portions du signal chromatographique (SB) à traiter (EXT - figure 6)*

L'opération initiale est la détermination de l'ensemble des points sur le chromatogramme 2D définissant le contour d'une zone, c'est-à-dire un polygone. L'extraction de portions de signaux 1D est effectuée en respectant les étapes suivantes, pour chaque segment de polygone, parcouru dans le sens de stockage des sommets du polygone :

- Soient $A$ et $B$ les deux extrémités d'un segment, $tA$ et $tB$ leurs coordonnées temporelles.

- Soit $n=(\ floor(\ (tB-tA)/MC2)\ -1)$ le nombre de colonnes de l'image traversées par le segment $AB$, extrémités exclues.

- Connaissant le nombre de colonnes, les coordonnées temporelles des sommets du polygone : $tk = tA+k*(tB-tA)/(n+1)$, avec $k$ variant de $I$ à $n$, sont calculées par intersection entre le côté du polygone et chaque colonne.

*Cas particuliers*

Les traitements s'effectuant sur le signal (1D) nécessitent que les points obtenus, une fois triés, soient une alternance de paires, notée $[T_{IN}\ ;\ T_{OUT}]$, définissant les portions de signal situées à l'intérieur du polygone. Un certain nombre de configurations particulières doivent être recherchées.

- Lorsque le polygone comporte une excroissance en forme de pointe orientée latéralement, le sommet doit être dupliqué ($T_{IN}=T_{OUT}$) pour que le point du signal éventuellement superposé soit pris en compte dans les calculs.

- Lorsque le polygone comporte un trou en forme de pointe orientée latéralement, le sommet doit être tronqué, afin d'éviter que le point éventuellement superposé avec le sommet ne soit compté deux fois.

- Lorsque le polygone comporte des segments verticaux entourés par deux segments partant dans des sens différents, l'extrémité du segment qui définit la pointe concave doit être supprimée, afin d'éviter que l'alternance des $T_{IN}\ T_{OUT}$ ne soit rompue.

A l'issue de cette étape, sont extraites les portions du signal chromatographique (SB) comprises entre deux intersections de polygone avec des colonnes du chromatogramme.

*3.2- Détermination des pics sur ces portions de signal 1D (TDP, TFP, TMP - figure 6)*

Le paragraphe précédent a permis de déterminer les temps de début et de fin de chaque colonne de l'image appartenant au polygone considéré, définissant des portions de signal chromatographique. Ce paragraphe précise la méthode développée pour déterminer sur ces portions ainsi obtenues les temps de début ($TDP$), les temps des maximums ($TMP$) et les temps de fin ($TFP$) de chaque pic.

La détermination de pics sur un signal 1D est généralement effectuée via des calculs de dérivée : dérivée première et seconde pour des co-élution faibles, et dérivée première, seconde et troisième pour des co-élution fortes.

La publication suivante recense les différentes méthodes utilisées :

G. Vivo-Truyols a, J.R. Torres-Lapasi, A.M. van Nederkassel, Y. Vander Heyden, D.L. Massart, 2005, Automatic program for peak detection and deconvolution of multi-overlapped chromatographic signals, Journal of Chromatography A, 1096 (2005) 133-145.

Cependant, les auteurs précédents montrent que l'utilisation de la dérivée première n'est pas suffisante dans le cas de forte co-élution (i.e. les deux pics sont très proches, il est très difficile de détecter visuellement la présence des deux pics) : il n'y a pas retour à zéro de la dérivée première. Ainsi selon l'invention, la méthode de détection des pics comporte les étapes suivantes, pour chaque portion de signal 1D obtenu précédemment :

1- Calcul des dérivées première, seconde (et éventuellement troisième) des portions de signal 1D ;

2- Calcul des seuils de traitement. Ils sont fixés par essais et erreurs. Les valeurs sont fixées pour chaque type de produit.

3- Détection des pics sur la portion

Pour une faible co-élution :

-   la valeur de la dérivée première est nulle en $P(t)$, négative avant et positive après ;

-   la différence des valeurs de la dérivée première entre le point $P(t)$ et le point suivant est supérieure au seuil *seuil3rd* ;

-   la valeur de la dérivée seconde en ce point $P(t)$ est négative et d'amplitude au seuil *seuil2nd* ;

-   la valeur du signal en ce point $P(t)$ est supérieure au seuil *ampThreshol*).

Pour une forte co-élution, la dérivée première est remplacée par la dérivée troisième :

-   la valeur de la dérivée troisième est nulle en $P(t)$, négative avant et positive après ;

-   la différence des valeurs de la dérivée troisième entre le point $P(t)$ et le point suivant est supérieure au seuil *seuil3rd* ;

-   la valeur de la dérivée seconde en ce point $P(t)$ est négative et d'amplitude supérieure **au seuil *seuil2nd*** ;

-   la valeur du signal en ce point $P(t)$ est supérieure au seuil *ampThreshold*.

Pour le calcul des dérivées on peut utiliser de façon préférentielle la méthode de filtrage de Savitzky-Golay, mais d'autres méthodes de filtrage robustes peuvent être employées. Une telle méthode est décrite par exemple dans:

Savitzky A., Golay M. J. E.," « Smoothing and differentiation of data by simplified least squares procedures », Anal. Chem., vol. 36, pp. 1627-1639, 1964.

Si toutes ces conditions sont vérifiées au point $P(t)$, un pic d'élution est enregistré en ce point, ou plus exactement, un maximum de pic chromatographique est enregistré au point $P(t)$. Avant de détecter un nouveau pic, un test est ajouté pour vérifier que la dérivée seconde s'éloigne suffisamment de la zone "proche de zéro". Cette zone est délimitée par la valeur d'un seuil, *seuilPeakProcheZero3rd.*

4- Vérification

-   Recherche des début et fin de chaque pic.
    Pour une faible co-élution, et pour chaque pic :

    -   Détermination d'une variation de signe de la dérivée première. Ceci correspond au premier passage à zéro.

    -   Tant que la valeur absolue de la dérivée première est inférieure au seuil *seuilStartStopProcheZero3rd* ne pas rechercher de nouveau passage à zéro.

- Rechercher un nouveau passage à zéro de la dérivée première.

Pour une forte co-élution, l'algorithme est identique, mais la dérivée troisième est utilisée.

- Contrôle a posteriori :

  - S'il existe un pic entre le pic courant et le premier passage à zéro, alors le pic **Stop** (respectivement **Start**) prendra la valeur du pic courant.

  - S'il existe un pic entre le pic courant et le second passage à zéro, alors le pic **Stop** (respectivement **Start**) prendra la valeur du premier passage à zéro.

  - Sinon, le pic **Stop** (respectivement **Start**) prendra la valeur du second passage à zéro.

5- Affinement des résultats obtenus

- Amélioration du premier pic **Start**. Le premier pic **Start** ne possédant aucun voisin avec le précédant, il peut être déplacé vers le début du signal (le traitement est effectué sur une colonne), jusqu'à ce que la hauteur du signal ne dépasse pas la valeur **ampThreshold.** Ceci permet de prendre en compte plus de valeurs pour le premier pic.

- Regroupement possible des pics **Start** et **Stop** et des pics voisins. Quand deux pics sont voisins, il est possible que la meilleure solution soit de regrouper le pic **Stop** du voisin précédent avec le pic **Start** du voisin suivant. Avant d'effectuer ce regroupement, le test suivant est effectué sur le minimum entre les deux point à regrouper. Si cette valeur est supérieure à **ampThreshold,** les deux pics sont regroupés sur ce point. Sinon, ils ne sont pas modifiés.

- Amélioration du dernier pic **Stop.** Le dernier pic **Stop** ne possédant aucun voisin avec le suivant, il peut être déplacé vers la fin du signal, jusqu'à ce que la hauteur du signal ne dépasse plus la valeur **ampThreshold.** Cela permet de prendre en compte plus de valeurs pour le dernier pic.

6- Analyse a posteriori par suppression des pics ne respectant pas les critères suivants:

- hauteur du pic inférieur à un seuil fixé par l'utilisateur ;

- largeur du pic inférieur à un seuil fixé par l'utilisateur ;

- aire du pic inférieur à un seuil fixé par l'utilisateur.

Les seuils de traitement suivants sont donc utilisés (ils sont fixés par essais et erreurs pour chaque type de produit). Des valeurs sont données à titre d'exemple non limitatif :

| | |
|---|---|
| seuil2nd | : 5 |
| ampThreshold | : 200 |
| seuil3rd | : 2 |
| seuilPeakProcheZero3rd | : 5 |
| seuilStartStopProcheZero3rd | : 1 |

Ainsi, à l'issue de cette étape, on connaît les temps de début (pic **Start**), les temps des maximums ($P(t)$), et les temps de fin (pic **Stop**) de chaque pic chromatographique présent sur les portions de signaux.

*3.3- Ajustement d'un polygone sur les temps de début et de fin des pics*

La méthode précédente a permis de déterminer les temps de début et de fin de chaque pic sur chaque colonne de l'image. Ces temps sont ensuite utilisés pour ajuster automatiquement les polygones. La relation bijective entre les coordonnées spatiales et leurs coordonnées temporelles est utilisée. La méthode suit les étapes suivantes :

Pour chaque point d'intersection entre le polygone et une colonne de l'image :

- Si le point ne se trouve sur aucun pic (i.e. il n'est pas compris entre un pic **Start** et un pic **Stop** ) **:** tant que le point n'est pas égale à la limite du polygone, ou à la limite de l'image, ou à un début ou un fin de pic, le point est déplacé verticalement vers le pic le plus proche (temps de début ou de fin d'un pic).

- Si le point est compris entre un début et un maximum de pic : le point est déplacé vers le début du pic.

- Si le point est compris entre un maximum de pic et une fin de pic, le point est déplacé vers la fin du pic.

Dans certains cas, deux sommets auparavant éloignés verticalement deviennent distants d'une distance inférieure ou égale à un pixel. Ils deviennent alors confondus. On supprime alors les sommets suivants :

- Les sommets groupés sur les extrémités horizontales du polygone.

- Les sommets dont les voisins horizontaux sont alignés avec lui même (donc inutile pour le stockage en mémoire du contour).

Cet algorithme garantit la jointure entre polygones. Aucune partie du signal n'est donc perdue.

Selon un mode de réalisation, on ajoute une étape supplémentaire de simplification des polygones. En effet, les opérations précédentes peuvent produire des polygones dont certaines arêtes contiennent plus d'un point. Il est donc utile de pouvoir les simplifier, ne serait-ce que pour permettre une manipulation plus aisée lors des modifications à la souris. La méthode suivante est utilisée. En partant du premier point du contour, et tant que le dernier n'est pas traité :

- Si le point courant est aligné avec les deux suivants, alors

  - Retirer le point du milieu,

  - Retourner deux points en arrière,

- Sinon, passer au point suivant.

- Analyse a posteriori du contour : si la variation du point est trop importante (en relation avec la longueur de la portion), la position finale du point est calculée comme l'interpolation linéaire par rapport à ses voisins. Le contour final est ainsi obtenu.

<u>4- Détermination de la composition moléculaire de l'échantillon</u>

Les taches du chromatogramme 2D représentent un ensemble de pics chromatographiques. L'aire de ces taches est proportionnelle à la quantité d'un composé moléculaire spécifique.

Si toutes les coordonnées temporelles des intersections du polygone définissant le polygone avec les colonnes de l'image sont connues et ont été retraitées selon les principes énoncés au paragraphe précédent, alors les aires peuvent être calculées simplement avec l'algorithme suivant :

- Trier les coordonnées temporelles par ordre croissant (les tranches seront définies pour tout k par [$t2k\text{-}1$ $t2k$]),

- Ajouter des points doubles sur la ligne de franchissement du bord de l'image,

- Sommer les valeurs du signal sur les tranches par colonne, et leurs sommes cumulées.

Les traitements ne sont effectués pour chaque polygone que si la période de modulation courante est identique à celle mémorisée dans le polygone. Les calculs d'aires sont tous effectués avec un offset calculé de sorte que le polygone soit au centre de l'image. Cela permet d'obtenir pour chaque analyse des fichiers de résultat indépendants de l'offset de deuxième colonne. Seules les coordonnée géographiques du maximum de chaque polygone figurant dans le fichier de résultat sont alors dépendantes de l'offset de deuxième colonne.

Selon un mode de réalisation, les polygones peuvent être affichés. Pour affecter un masque à une nouvelle analyse, il est impératif de prendre en compte le fait que l'offset peut être différent. De plus, quel que soit le polygone considéré, il existe une valeur de l'offset de deuxième colonne qui va le décaler suffisamment vers le haut ou le bas de l'image pour qu'il finisse par franchir le bord, devenant partiellement invisible.

Pour que le polygone soit complètement visible, trois étapes successives sont nécessaires :

- Calcul des coordonnées des sommets du polygone en configuration initiale (offset de deuxième colonne, *TS* et période de modulation de création) :

$$[x0,y0] = f(t,OC2,TS,MC2)$$

- Décalage à l'offset de deuxième colonne courant :

$$[x1,y1] = [x0,y0] + [OC2\text{-}OC20 \ \text{--}OC2\text{+}OC20]$$

- Calcul et affichage des polygones situés « au-dessus » et « au-dessous » par décalage:

$$[x2,y2] = [x1,y1] + [MC2 \ \text{--}MC2]$$

$$[x3,y3] = [x1,y1] + [\text{-}MC2 \ MC2]$$

Les trois polygones ainsi obtenus, dont tous les points respectent t=x+y, sont tracés. Ainsi, soit le polygone central est totalement visible, soit il déborde de l'image, et l'un des polygone « au-dessus » ou « au dessous » apparaît, représentant la partie qui déborde, et revient par l'autre bord de l'image.

**Résultats obtenus**

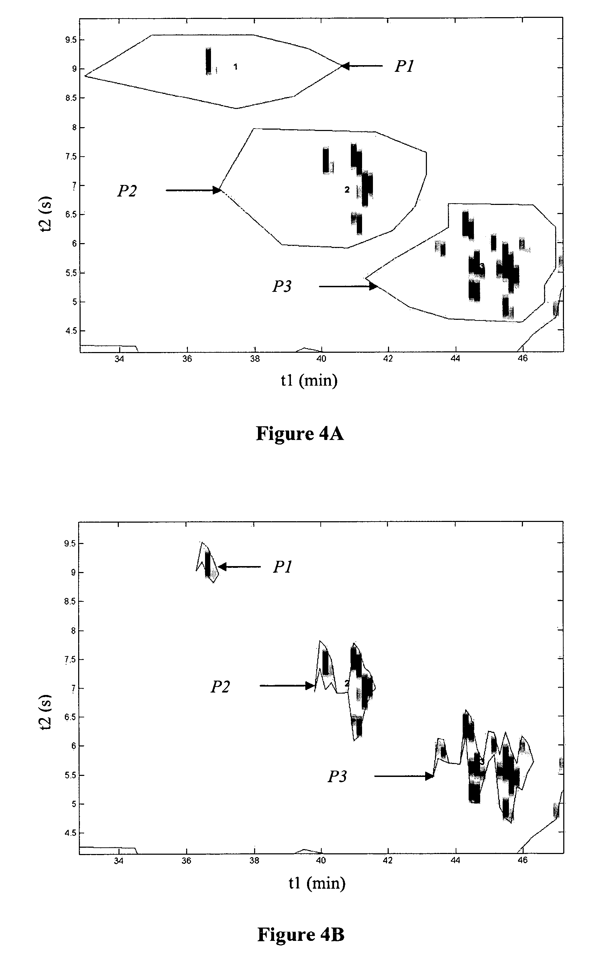

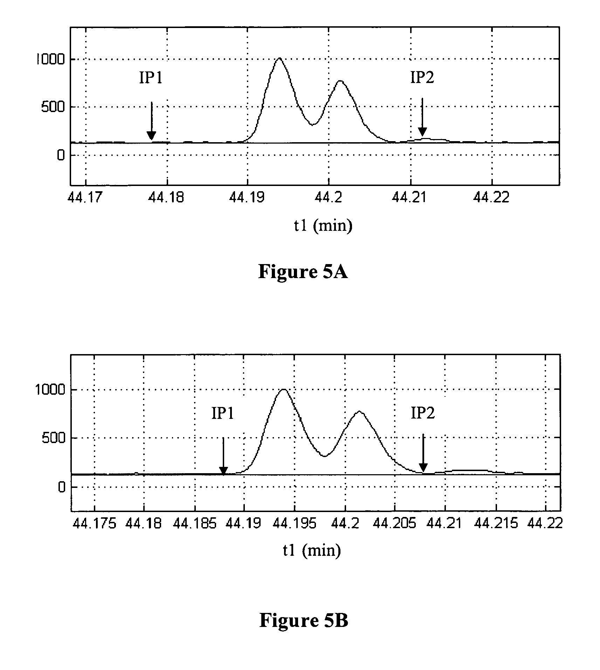

Les figures 4A et 4B présentent trois polygones (*P1*, *P2* et *P3*) avant (figure 4A) et après (figure 4B) resserrement. L'axe des abscisses représente le temps de séparation selon la première colonne (t1) et l'axe des ordonnées représente le temps de séparation selon la seconde colonne (t2). Les limites inférieures et supérieures des polygones correspondent bien à des débuts et de fins de pics, comme l'illustre les figure 5A (avant resserrement) et 5B (après resserrement), pour le polygone *P2*. Les intersections du polygone avec le signal 1D sont notées IP1 et IP2.

Les tableaux 1 et 2 montrent le résultat d'une étude de répétabilité. Le même échantillon est analysé cinq fois. L'erreur de dispersion est calculée par un test de Student pour un niveau d'erreur de 99%. L'erreur est de 25.6%. Après resserrement, l'erreur est de 16.2%. Ceci correspond à une amélioration notable de la répétabilité.

Tableau 1 : Cinq analyses manuelles par GC2D du même échantillon

| Blob numero | 20802 | 20802_2 | 020802_3 | 020802_4 | 020802 5 | Moyenne | Ecart Type | Intervalle de condiance a 99% | Ecart relatif | Erreur de disp |
|---|---|---|---|---|---|---|---|---|---|---|
| | Sans | Sans | Sans | Sans | Sans | Sans | | | Sans | |
| 1 | 693.6132 | 677.422 | 638.9863 | 688.7529 | 600.0112 | 660 | 39.69 | 153 | 23.2 | 24.24167333 |
| 2 | 2632.8263 | 2760.8976 | 2554.0544 | 2795.0653 | 2618.5905 | 2672 | 101.67 | 391 | 14.6 | 15.33230536 |
| 3 | 4430.6724 | 4520.2499 | 4552.3978 | 4488.6817 | 4458.3786 | 4490 | 48.30 | 186 | 4.1 | 4.334714466 |
| 4 | 4371.3873 | 4409.2807 | 4560.4943 | 4193.0855 | 4269.2032 | 4361 | 140.41 | 541 | 12.4 | 12.97608431 |
| 5 | 2952.2289 | 3253.7824 | 2956.6574 | 3302.1977 | 3148.9983 | 3123 | 163.34 | 629 | 20.1 | 21.07977468 |
| 6 | 3236.0866 | 3237.5037 | 3378.3946 | 3368.8354 | 3606.3818 | 3365 | 151.11 | 582 | 17.3 | 18.09444814 |
| 8 | 1259.66 | 1218.1999 | 1210.8659 | 1190.1887 | 1113.1557 | 1198 | 53.93 | 208 | 17.3 | 18.13581695 |
| 9 | 2533.5911 | 2316.7573 | 2638.2751 | 2490.2113 | 2527.4731 | 2501 | 116.91 | 450 | 18.0 | 18.83588558 |
| 10 | 2334.2034 | 2163.4456 | 2052.7626 | 2131.5606 | 2116.0108 | 2160 | 105.60 | 407 | 18.8 | 19.70505252 |
| 11 | 1453.451 | 1346.0544 | 1456.5842 | 1585.1523 | 1333.2416 | 1435 | 102.00 | 393 | 27.4 | 28.64807037 |
| 12 | 4746.8259 | 4600.3953 | 4634.1487 | 4659.3319 | 4550.3252 | 4638 | 73.17 | 282 | 6.1 | 6.357278762 |
| 13 | 5895.684 | 5897.3614 | 5970.0231 | 5948.8879 | 5891.6733 | 5921 | 36.20 | 139 | 2.4 | 2.463659877 |
| 14 | 4046.6803 | 4007.7299 | 4108.1151 | 4020.697 | 3974.0226 | 4031 | 50.21 | 193 | 4.8 | 5.019568544 |
| 16 | 405.6626 | 159.8395 | 209.1948 | 199.3375 | 216.3829 | 238 | 96.19 | 370 | 155.6 | 162.8226345 |
| 17 | 792.702 | 643.9954 | 707.9638 | 684.1475 | 542.2587 | 674 | 91.65 | 353 | 52.3 | 54.78521606 |
| 18 | 6014.4004 | 5859.8967 | 5851.3828 | 5854.5308 | 5834.8535 | 5883 | 74.04 | 285 | 4.8 | 5.071954037 |
| 19 | 9649.6001 | 9488.3745 | 9778.6676 | 9660.4628 | 9715.5641 | 9659 | 108.08 | 416 | 4.3 | 4.509474891 |
| 20 | 8913.5894 | 9024.296 | 8845.8939 | 9198.3286 | 8773.009 | 8951 | 166.34 | 640 | 7.2 | 7.488934271 |
| 24 | 370.4966 | 340.469 | 345.5483 | 315.5919 | 387.1903 | 352 | 27.75 | 107 | 30.4 | 31.78470349 |
| 26 | 297.7412 | 338.888 | 295.6542 | 299.1189 | 280.7397 | 302 | 21.67 | 83 | 27.6 | 28.87751123 |
| 27 | 1234.7348 | 1411.9928 | 1217.4489 | 1235.1751 | 1287.7685 | 1277 | 79.72 | 307 | 24.0 | 25.14946643 |
| 28 | 2886.1509 | 2869.4489 | 2862.6869 | 2814.2043 | 2829.2772 | 2852 | 29.70 | 114 | 4.0 | 4.196702337 |
| 32 | 911.9924 | 782.2021 | 920.9414 | 701.143 | 802.7238 | 824 | 92.78 | 357 | 43.4 | 45.38838304 |
| 34 | 1738.799 | 1705.1357 | 2313.468 | 2160.7415 | 1896.4163 | 1963 | 266.05 | 1024 | 522 | 54.62126328 |
| 35 | 310.281 | 277.8327 | 285.0977 | 313.8031 | 294.9582 | 296 | 15.57 | 60 | 202 | 21.17466407 |
| Somme | 74113.0608 | 73311.4514 | 74345.7078 | 74299.2332 | 73068.6081 | 2953.1 | 90.1 | 346.9 | 24.5 | 25.6 |

Tableau 2 : Cinq analyses manuelles puis resserrement par GC2D du même échantillon

| | | | | | | | | | | |
|---|---|---|---|---|---|---|---|---|---|---|
| 1 | 327.0229 | 327.0229 | 327.0229 | 327.0229 | 327.0229 | 327 | 0.00 | 0 | 0.0 | 6.64817E-06 |
| 2 | 2049.1434 | 2049.1434 | 2049.1434 | 2049.1434 | 2049.1434 | 2049 | 0.00 | 0 | 0.0 | 0 |
| 3 | 3907.1145 | 3950.93 | 3951.0624 | 3857.1669 | 3907.1145 | 3915 | 38.92 | 150 | 3.8 | 4.006953873 |
| 4 | 3814.2792 | 3680.8984 | 3814.6387 | 3552.5253 | 3677.254 | 3708 | 110.14 | 424 | 11.4 | 11.97021108 |
| 5 | 2462.2322 | 2498.7872 | 2390.9256 | 2636.7412 | 2502.0068 | 2498 | 89.46 | 344 | 13.8 | 14.43115513 |
| 6 | 2776.5712 | 2707.5659 | 2870.9512 | 2798.4047 | 2994.0766 | 2830 | 108.90 | 419 | 14.8 | 15.51084172 |
| 8 | 787.652 | 821.3382 | 788.2291 | 787.652 | 787.652 | 795 | 15.00 | 58 | 7.3 | 7.609775305 |
| 9 | 1924.8644 | 1533.331 | 1727.2909 | 1718.0022 | 1855.307 | 1752 | 150.11 | 578 | 33.0 | 34.53436058 |
| 10 | 1643.6372 | 1477.7094 | 1486.3356 | 1554.3509 | 1555.0996 | 1543 | 66.85 | 257 | 16.7 | 17.45512646 |
| 11 | 1102.7736 | 1102.7736 | 1102.7736 | 1102.7736 | 1102.7736 | 1103 | 0.00 | 0 | 0.0 | 0 |
| 12 | 3911.3286 | 3911.7861 | 3911.3286 | 3911.6787 | 3911.9992 | 3912 | 0.29 | 1 | 0.0 | 0.030238054 |
| 13 | 5222.5367 | 5153.0005 | 5153.0005 | 5222.5367 | 5153.2036 | 5181 | 38.05 | 147 | 2.8 | 2.959737113 |
| 14 | 3277.0673 | 3325.3886 | 3346.5749 | 3286.2045 | 3235.0641 | 3294 | 43.50 | 168 | 5.1 | 5.322299714 |
| 16 | 36.7006 | 36.7006 | 36.7006 | 36.7006 | 36.7006 | 37 | 0.00 | 0 | 0.0 | 0 |
| 17 | 395.0539 | 395.0539 | 395.0539 | 395.0539 | 395.0539 | 395 | 0.00 | 0 | 0.0 | 5.50331 E-06 |
| 18 | 5450.6448 | 5450.6448 | 5450.6448 | 5450.6448 | 5450.6448 | 5451 | 0.00 | 0 | 0.0 | 0 |
| 19 | 9187.3002 | 9199.4373 | 9187.3002 | 9187.3002 | 9187.3002 | 9190 | 5.43 | 21 | 0.2 | 0.23803035 |
| 20 | 8702.6044 | 8704.4868 | 8637.662 | 8744.231 | 8499.4546 | 8658 | 96.35 | 371 | 4.3 | 4.485094278 |
| 24 | 370.4966 | 340.469 | 345.5483 | 237.4559 | 299.3495 | 319 | 52.09 | 201 | 62.9 | 65.87340088 |
| 26 | 216.0155 | 216.0155 | 216.0155 | 267.6556 | 216.0155 | 226 | 23.09 | 89 | 39.3 | 41.11866945 |
| 27 | 393.0941 | 316.8948 | 416.9703 | 377.2603 | 443.0711 | 389 | 47.59 | 183 | 47.1 | 49.24334744 |
| 28 | 813.2213 | 782.7559 | 809.9898 | 783.0572 | 848.0357 | 807 | 26.89 | 104 | 12.8 | 13.42025606 |
| 32 | 2694.7855 | 2379.9089 | 1818.8017 | 2598.2624 | 2594.5693 | 2417 | 353.82 | 1362 | 56.4 | 58.98873746 |
| 34 | 135.7673 | 119.5965 | 135.7673 | 135.7673 | 135.7673 | 133 | 7.23 | 28 | 21.0 | 21.99009281 |
| 35 | 479.5001 | 435.0798 | 394.6555 | 394.6555 | 394.6555 | 420 | 37.73 | 145 | 34.6 | 36.22809801 |
| Somme | 62081.4075 | 60916.719 | 60764.3873 | 61412.2477 | 61558.3353 | 2453.9 | 52.5 | 202.0 | 15.5 | 16.2 |

Enfin, le tableau 3 illustre l'amélioration obtenue dans la prédiction des concentrations des constituants d'un produit pétrolier :

Tableau 3 : Amélioration obtenue dans la prédiction des concentrations

| Concentration | C4-DI-AROMATICS | C12-N-PARAFFINS |
|---|---|---|
| Avant resserrement | 9.3 %m/m | 0.42 %m/m |
| Après resserrement | 11 %m/m | 0.36 %m/m |

**Avantages**

Le resserrement automatique de chaque polygone est basé sur des critères physiques : chaque colonne de l'image correspond à un signal de chromatographie en phase gazeuse bidimensionnelle issu de la seconde colonne. La limite inférieure (respectivement supérieure) d'un polygone doit donc correspondre à un début (respectivement fin) de pic d'élution sur le signal 1D.

Ces traitements permettent d'une part de minimiser le temps de traitement (via l'application du masque et le resserrement automatique) et d'autre part d'améliorer la répétabilité et la justesse (via le resserrement automatique).

La méthode selon l'invention peut donc est être appliquée à la détermination de la composition massique d'hydrocarbures et d'autres constituants des produits issus de l'industrie chimique ou pétrolière. Elle permet d'améliorer la justesse et la répétabilité des analyses.

**Revendications**

1.  Méthode d'analyse quantitative d'un mélange de composés moléculaires par chromatographie en phase gazeuse bidimensionnelle, dans laquelle on génère un chromatogramme (*CHR*) en deux dimensions à partir d'un signal chromatographique (*SB*), on sélectionne des pics chromatographiques à l'aide de polygones, **caractérisée en ce qu'**elle comporte les étapes suivantes pour au moins un polygone :

    A- on ajuste au moins un polygone, en réalisant les étapes suivantes :

       - on identifie des portions dudit signal chromatographique comprises dans ledit polygone ;
       - on détermine des temps de début, des temps de fin et des maximums de pics chromatographiques présents sur lesdites portions ;
       - on ajuste ledit polygone en déplaçant des points d'intersection entre ledit polygone et lesdites portions, en fonction desdits temps de début, desdits temps de fin et desdits maximums de pics chromatographiques ;

    B- on détermine une quantité d'au moins un composé moléculaire en calculant l'aire dudit polygone ainsi ajusté.

2.  Méthode selon la revendication 1, dans laquelle on ajuste ledit polygone en réalisant les étapes suivantes pour chaque point d'intersection :

       - si ledit point d'intersection est compris entre le début et le maximum d'un pic chromatographique, le point est déplacé vers le temps de début du pic,
       - si ledit point d'intersection est compris entre le maximum et la fin d'un pic chromatographique, le point est déplacé vers le temps de fin du pic,
       - si ledit point d'intersection ne se situe pas entre un temps de début et un temps de fin d'un pic chromatographique, le point est déplacé verticalement le long d'une portion de signal vers le pic le plus proche, tant que ledit point n'est pas confondu avec la limite dudit polygone, ou avec la limite dudit chromatogramme, ou avec un début ou une fin de pic chromatographique.

3.  Méthode selon l'une des revendications précédentes, dans laquelle on ajuste lesdits polygones en partant d'un premier point d'intersection et tant que le dernier point n'est pas traité, en retirant un point du milieu si un point courant est aligné avec les deux suivants, et l'on retourne deux points en arrière, sinon on passe au point suivant.

4.  Méthode selon l'une des revendications précédentes, dans laquelle on ajuste lesdits polygones en calculant la position finale d'un sommet dudit polygone par une interpolation linéaire par rapport aux sommets voisins.

**5.** Méthode selon l'une des revendications précédentes, dans laquelle on délimite lesdites taches en construisant des polygones manuellement.

**6.** Méthode selon l'une des revendications précédentes, dans laquelle on sélectionne des pics chromatographiques à l'aide d'un masque de polygones que l'on adapte à la chromatographie en phase gazeuse bidimensionnelle utilisée, en replaçant chaque sommet formant ledit polygone sur la portion dudit signal la plus proche.

**7.** Méthode selon l'une des revendications précédentes, dans laquelle on détermine des temps de début, des temps de fin et des maximums de pics chromatographiques, à partir des dérivées première, seconde et troisième desdites portions dudit signal chromatographique.

**8.** Méthode selon la revendication 6, dans laquelle on calcule les dérivées à l'aide de la méthode de filtrage de Savitzky-Golay.

**Figure 1**

**Figure 2**

**Figure 3**

**Figure 4A**

**Figure 4B**

Figure 5A

Figure 5B

```
┌─────────────────┐
│      GC2D       │
└─────────────────┘
         │
         ▼
┌─────────────────┐
│    CHR, POL     │
└─────────────────┘
         │
         ▼
┌─────────────────┐
│       EXT       │
└─────────────────┘
         │
         ▼
┌─────────────────┐
│  TDP, TFP, TMP  │
└─────────────────┘
         │
         ▼
┌─────────────────┐
│       ADJ       │
└─────────────────┘
         │
         ▼
┌─────────────────┐
│      COMP       │
└─────────────────┘
```

**Figure 6**

**Office européen
des brevets**

**RAPPORT DE RECHERCHE EUROPEENNE**

Numéro de la demande

EP 08 29 0061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BEENS JAN; BOESLENS HANS;TIJSSEN ROBERT; BLOMBERG JAN: "Quantitative Aspects of Comprehensive Two-Dimensional Gas Chromatography (GCxGC)" JOURNAL OF HIGH RESOLUTION CHROMATOGRAPHY, vol. 21, janvier 1998 (1998-01), pages 47-54, XP002440106 WILEY | 1,5 | INV. G01N30/86 G06T3/00 G06T5/00 ADD. G01N30/02 G01N30/46 |
| Y | * le document en entier * | 4,6-8 | |
| A,D | US 5 196 039 A (PHILLIPS JOHN B [US] ET AL) 23 mars 1993 (1993-03-23) * colonne 10, ligne 22 - ligne 54 * | 1 | |
| A | VENDEUVRE C ET AL: "Characterisation of middle-distillates by comprehensive two-dimensional gas chromatography (GCxGC): A powerful alternative for performing various standard analysis of middle-distillates" JOURNAL OF CHROMATOGRAPHY A, ELSEVIER, AMSTERDAM, NL, vol. 1086, no. 1-2, 9 septembre 2005 (2005-09-09), pages 21-28, XP004995136 ISSN: 0021-9673 * abrégé * * page 23, colonne 2, alinéa 1 * * page 26, colonne 2, alinéa 2 * | 1 | |

-/--

**DOMAINES TECHNIQUES RECHERCHES (IPC)**

G01N
G06T

Le présent rapport a été établi pour toutes les revendications

| Lieu de la recherche | Date d'achèvement de la recherche | Examinateur |
|---|---|---|
| Munich | 22 avril 2008 | Bravin, Michel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P04C02)

Office européen
des brevets

**RAPPORT DE RECHERCHE EUROPEENNE**

Numéro de la demande

EP 08 29 0061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | ANONYMOUS: "GC Image User's Guide: Pattern recognition"[Online] 14 décembre 2005 (2005-12-14), pages 1-7, XP002440107 Extrait de l'Internet: URL:web.archive.org/web/20051214093733/www.gcimage.com/templates.html> [extrait le 2007-06-28] * page 3, alinéa 1 * * page 4, alinéa 1 * ----- | 6 | |
| Y | REICHENBACH S E ET AL: "Information technologies for comprehensive two-dimensional gas chromatography" CHEMOMETRICS AND INTELLIGENT LABORATORY SYSTEMS, ELSEVIER SCIENCE PUBLISHERS B.V. AMSTERDAM, NL, vol. 71, no. 2, 28 mai 2004 (2004-05-28), pages 107-120, XP004506974 ISSN: 0169-7439 * abrégé * * page 115, colonne 1, ligne 33 - colonne 2, ligne 32 * ----- | 6 | DOMAINES TECHNIQUES RECHERCHES (IPC) |
| P,Y | PETERS SONJA ; VIVÓ-TRUYOLS GABRIEL ; MARRIOTT PHILIP J; SCHOENMAKERS PETER J: "Development of an algorithm for peak detection in comprehensive two-dimensional chromatography" JOURNAL OF CHROMATOGRAPHY A, vol. 1156, 2007, pages 14-24, XP002440108 ELSEVIER Publié en ligne le 21 november 2006 * abrégé * * page 16, colonne 1, dernier alinéa * * page 18, colonne 1, dernier alinéa - page 19, colonne 1, alinéa 2 * * figures 4,5 * ----- -/-- | 4,7,8 | |

Le présent rapport a été établi pour toutes les revendications

| Lieu de la recherche | Date d'achèvement de la recherche | Examinateur |
|---|---|---|
| Munich | 22 avril 2008 | Bravin, Michel |

**Office européen**

**des brevets**

**RAPPORT DE RECHERCHE EUROPEENNE**

Numéro de la demande

EP 08 29 0061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SONG QIANG;SAVANT AMEET; REICHENBACH STEPHEN E; LEDFORD EDWARD B: "Digital image processing for a new type of chemical separation system" PROCEEDINGS SPIE CONFERENCE ON APPLICATIONS OF DIGITAL IMAGE PROCESSING, DENVER, COLORADO, USA, JULY 1999, vol. 3808, octobre 1999 (1999-10), pages 2-11, XP002440109 SPIE * le document en entier * ----- | 1-8 | |

|  | DOMAINES TECHNIQUES RECHERCHES (IPC) |
|---|---|

Le présent rapport a été établi pour toutes les revendications

| Lieu de la recherche | Date d'achèvement de la recherche | Examinateur |
|---|---|---|
| Munich | 22 avril 2008 | Bravin, Michel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 29 0061

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-04-2008

| Document brevet cité au rapport de recherche | Date de publication | Membre(s) de la famille de brevet(s) | Date de publication |
|---|---|---|---|
| US 5196039 A | 23-03-1993 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5135549 A

- US 5196039 A

**Littérature non-brevet citée dans la description**

- **VAN MISPELAAR V.G. et al.** Novel system for classifying chromatographic applications, exemplified by comprehensive two dimensional gas chromatography and multivariate analysis. *Journal of Chromatography A,* 2005, vol. 1071, 229-237
- **S.E. REICHENBACH ; V. KOTTAPALLI, ; M. NI ; A. VISVANATHAN.** Computer language for identifying chemicals with compehensive two-dimensional gas chomatography and mass spectrometry. *Journal of Chromatography,* 2005, vol. 1071, 263-269
- **M. NI, ; S.E. REICHENBACH ; A. VISVANATHAN ; J. TERMAAT ; E.B. LEDFORD,.** Peak pattern variations related to comprehensive two-dimensional gas chromatography. *Journal of Chromatography,* 2005, vol. 1086, 165-170
- **DANIELA CAVAGNINO ; PAOLO MAGNI ; GIACINTO ZILIOLI ; SORIN TRESTIANU,.** Comprehensive two-dimensional gas chromatography using large sample volume injection for the determination of polynuclear aromatic hydrocarbons in complex matrices. *Journal of Chromatography A,* 2003, vol. 1019, 211-220

- Using Edge pattern Matching for Automatic Chemical Identification in GC 2D, Automatic Target Recognition XIV. **M. NI ; S.E. REICHENBACH.** Proceedings of the SPIE. 2004, vol. 5426, 155-163
- **G. VIVO-TRUYOLS A ; J.R. TORRES-LAPASI, ; A.M. VAN NEDERKASSEL ; Y. VANDER HEYDEN ; D.L. MASSART.** Automatic program for peak detection and deconvolution of multi-overlapped chromatographic signals. *Journal of Chromatography A,* 2005, vol. 1096, 133-145
- **SAVITZKY A. ; GOLAY M. J. E.** Smoothing and differentiation of data by simplified least squares procedures. *Anal. Chem.,* 1964, vol. 36, 1627-1639